# EUROPEAN PATENT SPECIFICATION

(11) **EP 1 440 848 B1**
(45) Date of publication and mention of the grant of the patent: **20.06.2007**
(21) Application number: 02770260.4
(22) Date of filing: 24.10.2002
(51) Int. Cl.: B60R 11/02

(54) **VEHICLE-MOUNTED ELECTRONIC DEVICE**
FAHRZEUGMONTIERTE ELEKTRONISCHE VORRICHTUNG
DISPOSITIF ELECTRONIQUE AUTOMOBILE EMBARQUE

(30) Priority: 30.10.2001 JP 2001331977; 31.05.2002 JP 2002158759
(43) Date of publication of application: 28.07.2004
(73) Proprietor: Kabushiki Kaisha Kenwood, Hachioji-shi, Tokyo 192-8525 (JP)
(72) Inventor: MATSUDA, Akihiro, Yokohama-shi, Kanagawa 227-0043 (JP); HIRAKO, Ryoichi, Sagamihara-shi, Kanagawa 229-0039 (JP)
(74) Representative: Leinweber & Zimmermann
(86) International application number: PCT/JP2002/011057
(87) International publication number: WO 2003/037683

(56) References cited:
- DE-A- 19 834 467
- JP-A- 2 117 450
- JP-A- 5 096 998
- JP-A- 10 129 362
- JP-U- 3 103 840
- JP-U- 62 142 880
- US-A- 4 211 976

## Description

### BACKGROUND OF THE INVENTION

### Field of the Invention

The present invention relates to a vehicle-mounted electronic device and its mount structure, and more particularly to the mount structure suitable for mounting the main body of a vehicle-mounted electronic device having a large panel and to the mount structure for mounting an operation panel and a monitor of a vehicle-mounted electronic device.

### Related Background Art

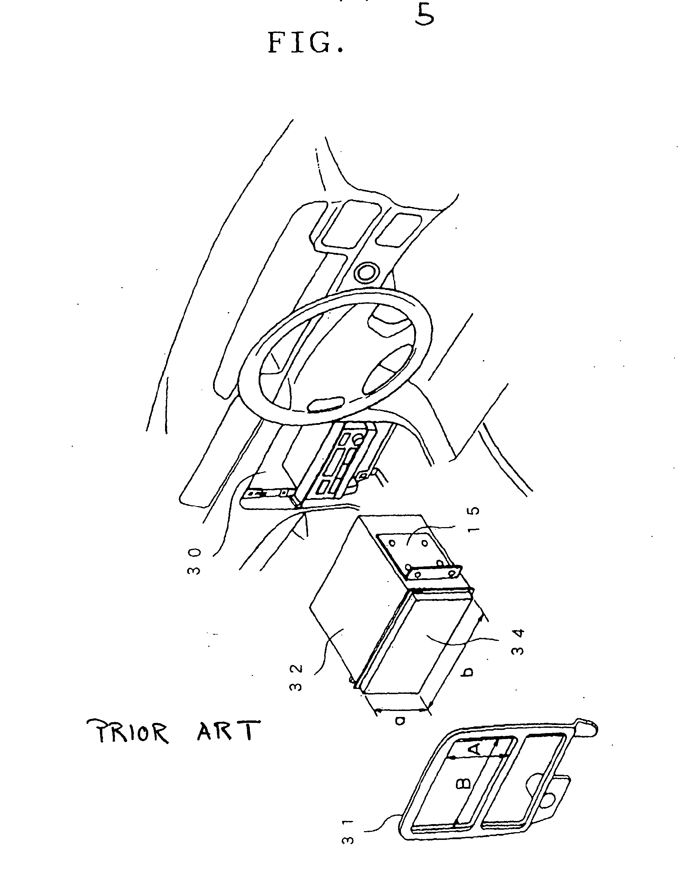

As shown in Fig. 5, when a vehicle-mounted electronic device such as a car stereo equipment is mounted on a housing recess of a vehicle, a mounting bracket 15 is mounted on an electronic device main body chassis 32 with screws, to mount the mounting bracket 15 on a vehicle. A cluster panel 31 is mounted covering the front side of the electronic device, and a panel 34 disposed on the front side of the electronic device main body is protruded from an opening of the cluster panel 31.

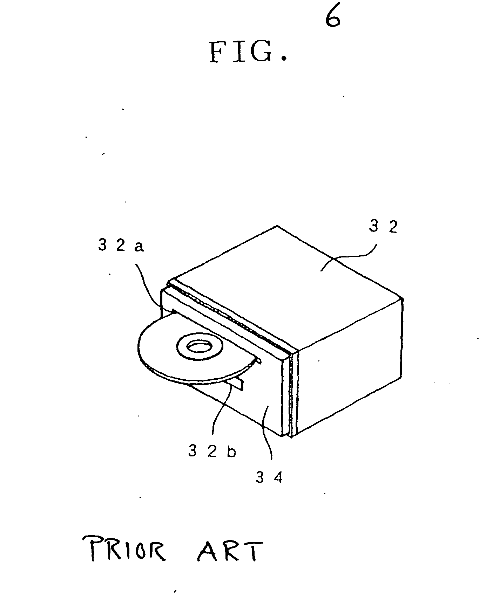

Fig. 6 shows an example of the panel 34 fixed to the electronic device main body chassis 32. In this example, a CD insertion slit 32a and a cassette insertion slit 32b are formed in the panel 34. In the example shown in Fig. 15, a panel 34 is movably mounted on an electronic device main body chassis 33. When this panel 34 is moved to the position where the front side of the electronic device is exposed, a CD insertion slit 33a appears.

With the mount structure of the conventional vehicle-mounted electronic device described above, in order to protrude the panel 34 from the opening of the cluster panel 31, the vertical and horizontal sizes a and b of the panel 34 are required to be smaller than the vertical and horizontal sizes A and B of the opening of the cluster panel 31.

Since the vertical and horizontal sizes A and B of the opening of the cluster panel 31 differ depending upon the vehicle type, the panel sizes are required to match the smallest cluster panel sizes, resulting in the small panel sizes.

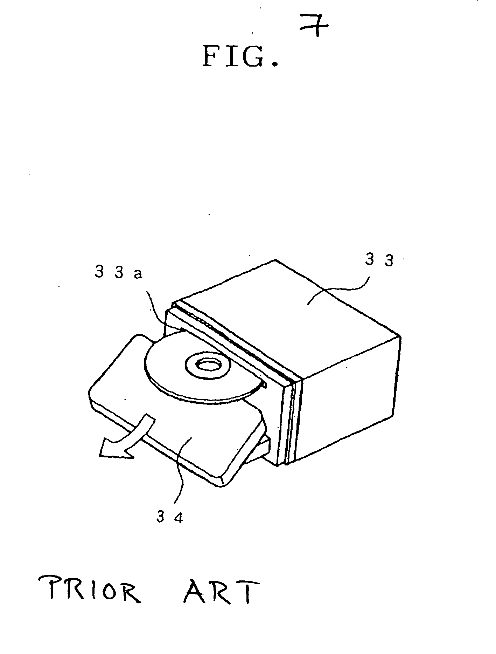

Since the CD insertion slit 32a and the like of the panel 34 shown in Fig. 6 are formed through the panel plate, the display unit, operation switches and the like are required to be small. In order to make movable the panel 34 shown in Fig. 7, the complicated mechanism is required. In order to accommodate such a mechanism, the sizes of the device become large.

The present invention has been made in view of the above-described points. An objective of the invention is to provide the mount structure for mounting a vehicle-mounted electronic device capable of providing a large area for disposing the panel display unit, operation switches and the like, with a simple mechanism.

US 4 211 976 A discloses a vehicle-mounted electronic device according to the preamble of claim 1.

### DISCLOSURE OF THE INVENTION

In order to achieve the above mentioned objective, the invention provides an electronic device comprising: a main body to be mounted on a vehicle by fixing said main body to said vehicle, a cluster panel to be fixed to the vehicle by inserting said main body therethrough, and a panel broader than an opening of said cluster panel to be fixed to said main body by covering said cluster panel with said panel, wherein a subsidiary bracket is mounted on a side wall of said main body in such a manner that a position of said subsidiary bracket can be adjusted, a mounting bracket is mounted with screws on said subsidiary bracket, and said mounting bracket can be mounted with screws on the vehicle.

This enables to provide a vehicle-mounted electronic device capable of providing a large area for disposing the panel display unit operation switches and the like, with a simple mechanism.

In a preferred embodiment of the invention, the subsidiary bracket is mounted on bosses formed on the side wall of the vehicle-mounted electronic device by using screws in such a manner that the screws used for mounting the mounting bracket on the subsidiary bracket are not abutted on the side wall of the main body of the vehicle-mounted electronic device.

The invention also provides an electronic device comprising: a main body to be mounted on a vehicle by fixing said main body to said vehicle, a cluster panel to be fixed to the vehicle by inserting said main body therethrough, and a panel broader than an opening of said cluster panel to be fixed to said main body by covering said cluster panel with said panel, wherein a plurality set of tapping holes are provided for mounting with screws a mounting bracket on a side wall of a main body of said vehicle-mounted electronic device, and said mounting bracket is mounted with screws on the side wall by using a desired set of tapping holes in such a manner that a position of the main body of said vehicle-mounted electronic device can be adjusted when said mounting bracket is mounted with screws on the vehicle.

This also enables to provide a vehicle-mounted electronic device capable of providing a large area for disposing the panel display unit, operation switches and the like, with a simple mechanism.

### BRIEF DESCRIPTION OF THE DRAWINGS

Fig. 1 is a broken perspective view of the vehicle-mounted electronic device and its mount structure according to a first embodiment of the invention.
Fig. 2 is a broken perspective view partially showing the mount structure shown in Fig. 1.
Fig. 3(a) is a broken perspective view of the vehicle-mounted electronic device and its mount structure according to a second embodiment of the invention, and Fig. 3(b) is an enlarged perspective view showing a member used for the mount structure.
Fig. 4 is a broken perspective view of the vehicle-mounted electronic device and its mount structure according to a third embodiment of the invention.
Fig. 5 is a broken perspective view showing an example of the mount state of a conventional vehicle-mounted electronic musical instrument.
Fig. 6 is a perspective view showing an example of a conventional vehicle-mounted electronic musical instrument.
Fig. 7 is a perspective view showing another example of a conventional vehicle-mounted electronic musical instrument.

### DESCRIPTION OF THE PREFERRED EMBODIMENTS

With reference to the accompanying drawings the vehicle-mounted electronic device, ist mount structure and the mount structure for mounting constituent elements of a vehicle-mounted electronic device will be described in connection with embodiments.

### Embodiments of the Invention

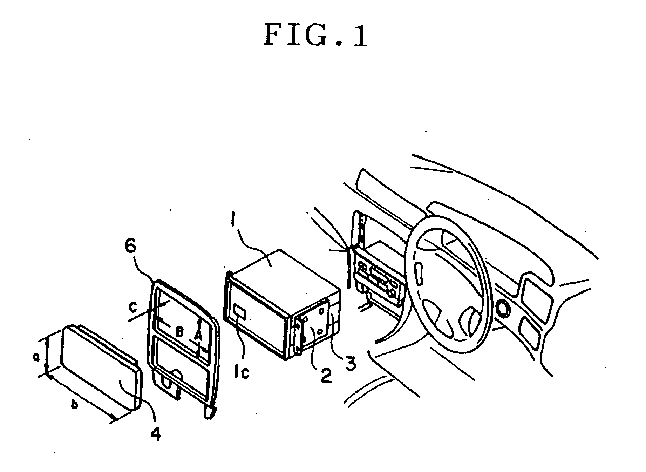

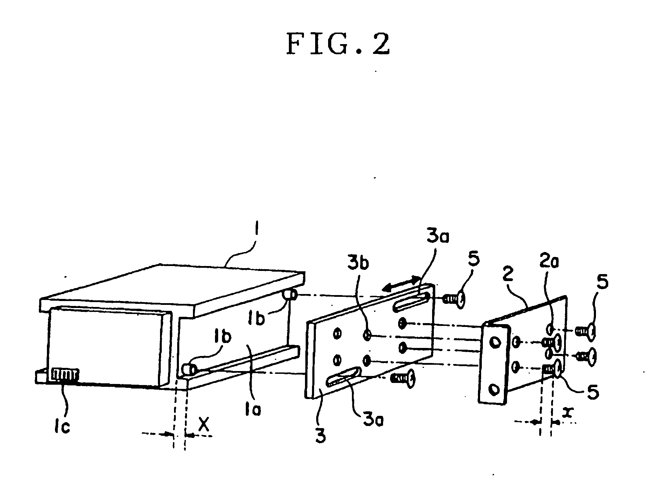

With reference to the accompanying drawings, the mount structure for mounting a vehicle-mounted electronic device according to the embodiments of the invention will be described. Fig. 1 is a schematic broken perspective view of the mount structure for mounting a vehicle-mounted electronic device according to the first embodiment of the invention. Fig. 2 is a partial broken perspective view showing the mount structure for mounting the vehicle-mounted electronic device shown in Fig. 1.

As shown in Figs. 1 and 2, a subsidiary bracket 3 is mounted on an electronic device main body chassis 1 with screws, and a mounting bracket 2 is mounted on the subsidiary bracket 3 with screws. As the mounting bracket 2 is mounted on the vehicle, the electronic device main body chassis 1 is fixed to the vehicle.

Thereafter, a cluster panel 6 is fixed to the vehicle, surrounding the periphery of the electronic device main body, and a panel 4 is mounted on the electronic device main body via the cluster panel 6. At this time, a connector 1c mounted on the electronic device main body chassis 6 is coupled to a connector mounted on the panel 4 so that the panel 4 is connected to the electronic device main body.

As detailed in Fig. 2, screws 5 inserted into elongated holes 3a of the subsidiary bracket 3 are threaded into tapped holes of bosses 1b upright mounted on a side wall 1a of the electronic device main body chassis 1, so that the subsidiary bracket 3 is fixed to the chassis. Screws 5 inserted into holes 2a of the mounting bracket 2 are threaded into tapped holes 3b of the subsidiary bracket 3, so that the mounting bracket 2 is fixed to the subsidiary bracket 3.

In the state that the mounting bracket 2 is fixed to the vehicle, the positions of the screws in the elongated holes 3a of the subsidiary bracket 3 are adjusted to set the fixing position of the electronic device main body.

The adjustment range of the fixing position of the subsidiary bracket 3 is set greater than the thickness (indicated at c in Fig. 1) of the cluster panel. A large panel can be used which has the vertical and horizontal sizes a and b larger than the vertical and horizontal sizes A and B of the opening of the cluster panel 6.

The height X of the boss 1b shown in Fig. 2 is greater than the length x of the screw 5 used for fixing the mounting bracket 2. Therefore, the screw 5 for fixing the mounting bracket 2 will not pushed against the side wall 1a of the electronic device main body chassis 1.

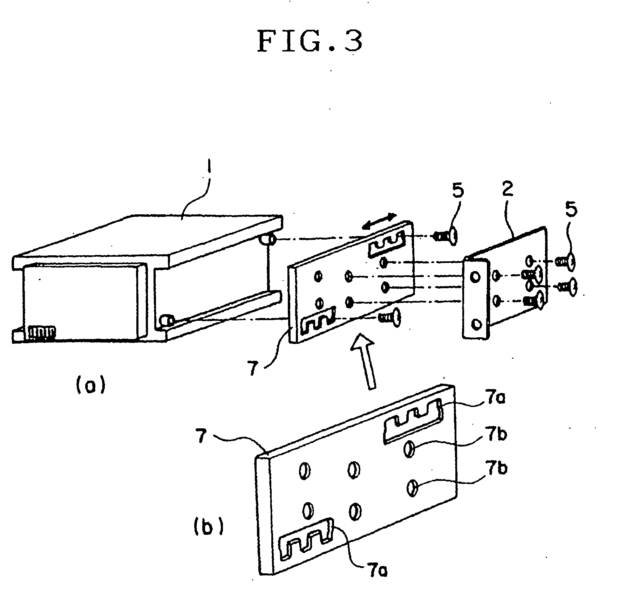

Figs. 3(a) is a broken perspective view partially showing the mount structure for mounting a vehicle-mounted electronic device according to the second embodiment of the invention, Fig. 3(b) is an enlarged perspective view showing a subsidiary bracket 7 used for the mount structure shown in Fig. 3(a). In this example, the subsidiary bracket 7 is fixed to the electronic device main body chassis 1 with screws 5 which are inserted into E-character shaped holes 7a formed through the sub-sidiary bracket 7. Screws 5 inserted into the holes of the mounting bracket 2 are threaded into tapped holes 7b of the subsidiary bracket 7, so that the mounting bracket 2 is fixed to the subsidiary bracket 7.

By changing the position of the screw 5 in the E-character shaped hole 7a, the position and height along a depth direction of the subsidiary bracket 7 relative to the electronic device main body chassis 1 can be adjusted. The other structures are similar to those of the first embodiment.

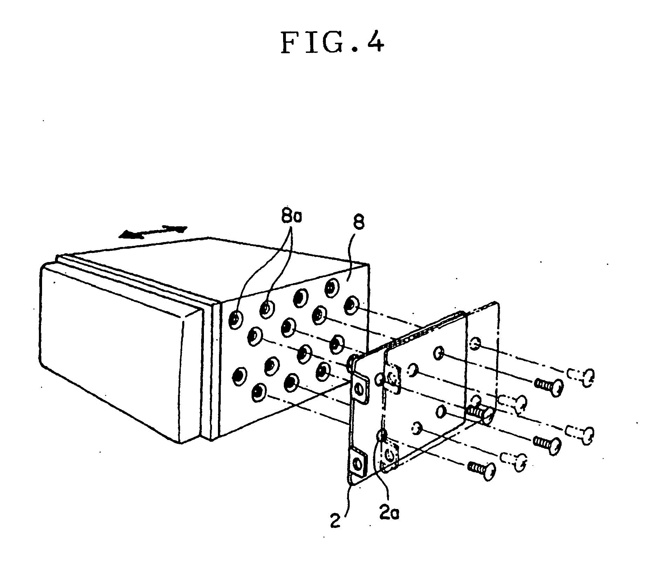

Fig. 4 is a broken perspective view partially showing the mount structure of a vehicle-mounted electronic device according to the third embodiment of the invention. In this example, the mounting bracket 2 is fixed to an electronic device main body chassis 8 in direct contact therewith. A plurality of sets of four tapped holes 8a into which each set of four screws is threaded to fix the mounting bracket 2 to the electronic device main body chassis 8. By using a desired set of four tapping holes 8a, the mount position of the mounting bracket 2 relative to the electronic device main body chassis 8 can be changed. It is therefore possible to set a desired position of the electronic device main body chassis 8 relative to the vehicle. The other structures are similar to those of the first embodiment.

### Industrial Application Fields

According to the mount structure for mounting a vehicle-mounted electronic device of the first invention, the front and rear position of the vehicle-mounted electronic device can be adjusted so as to match the thickness of the cluster panel without using a complicated mechanism, and in addition a large panel can be used. It is possible to prevent screws used for mounting a mounting bracket from entering the inside of the vehicle-mounted electronic device main body and destructing the inner mechanism.

## Claims

1. An electronic device comprising:
a main body (1) to be mounted on a vehicle by fixing said main body (1) to said vehicle,
a cluster panel (6) to be fixed to the vehicle by inserting said main body (1) therethrough, and
a panel (4) broader than an opening of said cluster panel (6) to be fixed to said main body (1) by covering said cluster panel (6) with said panel (4),
**characterized in that** a subsidiary bracket (3, 7) is mounted on a side wall of said main body (1) in such a manner that a position of said subsidiary bracket (3, 7) can be adjusted, a mounting bracket (2) is mounted with screws on said subsidiary bracket (3, 7), and said mounting bracket (2) can be mounted with screws on the vehicle.

2. The electronic device according to claim 1,
wherein said subsidiary bracket (3, 7) is mounted with screws (5) on bosses (1 b) formed on the side wall (1a) of the main body (1) of said vehicle-mounted electronic device in such a manner that said screws (5) used for mounting said mounting bracket (2) on said subsidiary bracket (3, 7) are not abutted on the side wall (1a) of the main body (1) of said vehicle-mounted electronic device.

3. An electronic device comprising:
a main body (8) to be mounted on a vehicle by fixing said main body (8) to said vehicle,
a cluster panel to be fixed to the vehicle by inserting said main body (8) therethrough, and
a panel broader than an opening of said cluster panel to be fixed to said main body (8) by covering said cluster panel with said panel,
**characterized in that** a plurality set of tapping holes (8a) are provided for mounting with screws a mounting bracket (2) on a side wall of a main body (8) of said vehicle-mounted electronic device, and said mounting bracket (2) is mounted with screws on the side wall by using a desired set of tapping holes (8a) in such a manner that a position of the main body (8) of said vehicle-mounted electronic device can be adjusted when said mounting bracket (2) is mounted with screws on the vehicle.

## Patentansprüche

1. Elektronische Vorrichtung, umfassend:
einen Hauptkörper (1), der an ein Fahrzeug durch Befestigen des Hauptkörpers (1) an das Fahrzeug anzumontieren ist,
ein Clusterpaneel (6), das an das Fahrzeug durch Einsetzen des Hauptkörpers (1) da hindurch zu befestigen ist, und
ein Paneel (4), breiter als eine Öffnung des Clusterpaneels (6), das an den Hauptkörper (1) durch Abdecken des Clusterpaneels (6) mit dem Paneel (4) zu befestigen ist,
**dadurch gekennzeichnet, dass** ein Stützträger (3, 7) an eine Seitenwand des Hauptkörpers (1) auf so eine Weise montiert ist, dass eine Position des Stützträgers (3, 7) eingestellt werden kann, ein Befestigungsträger (2) mit Schrauben an den Stützträger (3, 7) montiert ist und der Befestigungsträger (2) mit Schrauben an das Fahrzeug montiert werden kann.

2. Elektronische Vorrichtung nach Anspruch 1,
worin der Stützträger (3, 7) mit Schrauben (5) auf Naben (1b), die auf der Seitenwand (1a) des Hauptkörpers (1) der fahrzeugmontierten elektronischen Vorrichtung ausgebildet sind, auf so eine Weise montiert ist, dass die für das Montieren des Befestigungsträgers (2) an den Stützträger (3, 7) verwendete Schrauben nicht an die Seitenwand (1a) des Hauptkörpers (1) der fahrzeugmontierten elektronischen Vorrichtung gestoßen werden.

3. Elektronische Vorrichtung, umfassend:
einen Hauptkörper (8), der an ein Fahrzeug durch Befestigen des Hauptkörpers (8) an das Fahrzeug anzumontieren ist,
ein Clusterpaneel, das an das Fahrzeug durch Einsetzen des Hauptkörpers (8) da hindurch zu befestigen ist, und
ein Paneel, breiter als eine Öffnung des Clusterpaneels, das an den Hauptkörper (8) durch Abdecken des Clusterpaneels mit dem Paneel zu befestigen ist,
**dadurch gekennzeichnet, dass** eine Mehrzahlsatz von Kernbohrungen (8a) zum Montieren eines Befestigungsträgers (2) an eine Seitenwand eines Hauptkörpers (8) der fahrzeugmontierten elektronischen Vorrichtung mit Schrauben vorgesehen ist, und der Befestigungsträger (2) mit Schrauben an die Seitenwand unter Verwendung eines gewünschten Satzes von Kernbohrungen (8a) auf so eine Weise montiert ist, dass eine Position des Hauptkörpers (8) der fahrzeugmontierten elektronischen Vorrichtung eingestellt werden kann, wenn der Befestigungsträger (2) mit Schrauben an das Fahrzeug montiert ist.

## Revendications

1. Dispositif électronique comprenant :
un corps principal (1) à monter sur un véhicule en fixant ledit corps principal (1) audit véhicule,
un multi-panneau (6) à fixer au véhicule en insérant ledit corps principal (1) à travers celui-ci, et
un panneau (4) plus large que l'ouverture dudit multi-panneau (6) destiné à être fixé audit corps principal (1) en couvrant ledit multi-panneau (6) par ledit panneau (4),
**caractérisé en ce qu'**un support auxiliaire (3, 7) est monté sur une paroi latérale dudit corps principal (1) de telle manière qu'une position dudit support auxiliaire (3, 7) peut être ajustée, un support de montage (2) est monté avec des vis sur ledit support auxiliaire (3, 7), et ledit support de montage peut être monté avec des vis sur le véhicule.

2. Dispositif électronique selon la revendication 1, où ledit support auxiliaire (3, 7) est monté avec des vis (5) sur des bosses (1b) formées sur la paroi latérale (1a) du corps principal (1) dudit dispositif électronique automobile embarqué de telle manière que lesdites vis (5) utilisées pour le montage dudit support de montage (2) sur ledit support auxiliaire (3, 7) ne butent pas contre la paroi latérale (1a) du corps principal (1) dudit dispositif électronique automobile embarqué.

3. Dispositif électronique, comprenant :
un corps principal (8) à monter sur un véhicule en fixant ledit corps principal (8) audit véhicule,
un multi-panneau à fixer au véhicule en insérant ledit corps principal (8) à travers celui-ci, et
un panneau plus large qu'une ouverture dudit multi-panneau destiné à être fixé audit corps principal (8) en couvrant ledit multi-panneau par ledit panneau,
**caractérisé en ce que** plusieurs ensembles de trous taraudés (8a) sont prévus pour le montage avec des vis d'un support de montage (2) sur une paroi latérale d'un corps principal (8) dudit dispositif électronique automobile embarqué, et ledit support de montage (2) est monté avec des vis sur la paroi latérale en utilisant un ensemble souhaité de trous taraudés (8a) de telle manière qu'une position du corps principal (8) dudit dispositif électronique automobile embarqué peut être ajustée lorsque ledit support de montage (2) est monté avec des vis sur le véhicule.
